# EUROPÄISCHE PATENTSCHRIFT

(11) **EP 3 283 741 B1**
(45) Veröffentlichungstag und Bekanntmachung des Hinweises auf die Patenterteilung: **06.03.2019**
(21) Anmeldenummer: 16715518.3
(22) Anmeldetag: 08.04.2016
(51) Int. Cl.: F01N 13/18

(54) **ABGASROHRBOGEN**
PIPE ELBOW FOR EXHAUST GAS
COUDE DE TUBE POUR GAZ D'ÉCHAPPEMENT

(30) Priorität: 15.04.2015 DE 102015105749
(43) Veröffentlichungstag der Anmeldung: 21.02.2018
(73) Patentinhaber: Tenneco GmbH, 67840 Edenkoben (DE)
(72) Erfinder: SCHLIESCHE, Dirk, 76831 Billigheim-Ingenheim (DE)
(74) Vertreter: STT Sozietät Thews & Thews
(86) Internationale Anmeldenummer: PCT/EP2016/057718
(87) Internationale Veröffentlichungsnummer: WO 2016/166022

(56) Entgegenhaltungen:
- EP-A1- 0 935 057
- EP-A2- 1 548 245
- DE-U1-202011 106 361
- JP-A- 2007 085 312

## Beschreibung

Die Erfindung bezieht sich auf ein Abgasrohr gebildet aus mindestens zwei Rohrbogen mit je einer Rohrwand und je einer Mittelachse, die jeweils aus zwei Halbschalen gebildet sind, wobei die jeweilige Halbschale eine innere Randseite und eine äußere Randseite aufweist, die zwecks Bildung des Rohrbogens als Unter- und Oberschale gegeneinander zur Anlage bringbar sind, wobei der jeweilige so gebildete Rohrbogen eine Stirnseite aufweist und beide Stirnseiten zwecks Bildung des Abgasrohres zumindest mittelbar gegeneinander zur Anlage bringbar und vorzugsweise verschweißbar sind, wobei der jeweilige Rohrbogen nur eine Einlassöffnung und nur eine Auslassöffnung aufweist. Die beiden Rohrbogen sind dabei wie unten beschrieben unmittelbar oder mittelbar über ein kurzes Verbindungsstück miteinander verbunden.

Es ist bereits ein Abgasrohrbogen aus der US 2005/0115765 A1 bekannt, gebildet aus zwei gleichen Halbschalen, die mit einer Randseite gegeneinander angelegt und verbunden werden. Der Abgasrohrbogen bzw. beide Halbschalen weisen einen vorgegebenen Krümmungsradius auf.

DE 10 2011 106 242 A1 beschreibt einen Krümmer, der aus mehreren gleichen Krümmerrohren gebildet ist, wobei jedes Krümmerrohr aus zwei gleichen Halbschalen gebildet sein kann.

DE 10 2005 044 376 A1 beschreibt ein zweischaliges gerades Rohr gebildet aus zwei gleichen Halbschalen mit entsprechenden Verzahnungselementen an den zu verbindenden Randseiten.

DE 10 2009 053 028 A1 beschreibt ebenfalls zweischalige gerade Rohre gebildet aus zwei gleichen Halbschalen, die übereinander gesetzt werden.

EP 1 074 703 A1 beschreibt ein zweischaliges Katalysatorgehäuse gebildet aus zwei gleichen Halbschalen. Gleiches gilt für DE 87 01 980 U1.

DE 20 2011 106 361 U1 beschreibt ein bogenförmiges Abgasrohr, das aus zwei spiegelsymmetrischen Halbschalen gebildet ist, wobei jede Halbschale ein eckiges Ende zum Anschließen an einen Flansch und ein rundes Ende zum Anschließen an ein Abgasrohr aufweist.

Aus der EP 1 548 245 A2 ist ein Auspuffkrümmer bekannt, der aus drei Schalenkrümmern aufgebaut ist, wobei die Schalenkrümmer jeweils zwei Halbschalen aufweisen.

Die EP 0 935 057 A1 beschreibt einen gekurvten Rohrabschnitt eines Schalldämpfers, der zwei Halbschalen aufweist.

Die JP 2007 085312 A zeigt ein Abgasrohr aufweisend zwei Rohrbögen und ein Zwischenrohr. Die Rohrbögen sind jeweils aus zwei Halbschalen gebildet und über das Zwischenrohr gegeneinander zur Anlage gebracht.

Der Erfindung liegt die Aufgabe zugrunde, ein Abgasrohr derart auszubilden und anzuordnen, dass trotz einfachstem Aufbau verschiedene Abgasrohrformen ausgebildet und Anschlussebenen, die unterschiedlichste Winkel zueinander aufweisen, verbunden werden können.

Gelöst wird die Aufgabe erfindungsgemäß dadurch, dass alle vier Halbschalen Gleichteile sind.

Hierdurch wird erreicht, dass mit vier gleichen Halbschalen Abgasrohrbogen unterschiedlichster Architektur hergestellt werden können. Durch Variation des relativen Winkels zwischen beiden Rohrbogen können die Lage bzw. der Winkel der Einlassebene und die Lage bzw. der Winkel der Auslassebene unabhängig voneinander variiert werden.

In Abgasanlagen, insbesondere in EU 5 und EU 6 Anlagen für LKW und Busse sowie für Baumaschinen und Traktoren, ergibt sich grundsätzlich die Problematik, dass verschiedene Ausgangsrohrpositionen im vorhandenen Bauraum im Design vorzusehen sind. Neben den üblichen emissionsrelevanten Komponenten wie Urea-Mischstrecke und den Subtraten bzw. Cannings für DOC, DPF und SCR wird insbesondere bei LKW-Anwendungen häufig ein separates Akustikmodul oder ein zusätzlicher Schalldämpfer benötigt. Diese zusätzlichen Abgasrohrführungen mit engen Rohrbogen erfordern häufig besonders komplexe Designs, da übliche Biegeradien von Rohren nicht mehr bauraumkonform ausgeführt werden können. Rohrgeometrien mit engeren Biegeradien können einerseits mit dem relativ teuren IHU-Verfahren erzeugt werden oder aber erfindungsgemäß durch die Verwendung von Halbschalengeometrien, die identisch ausgeführt sind und mittels kurzer Verbindungsstücke verschweißt werden. Diese Verbindung erlaubt dann mittels nur einer Dreiblechschweißung pro Verbindungsstelle eine einfache, kostenreduzierte und qualitätsoptimierte Montage solcher Abgasrohrverbindungen und ermöglicht, die Teileanzahl in einem Gleichteilkonzept zu minimieren.

Gelöst wird die Aufgabe erfindungsgemäß auch durch ein Abgasrohr wie vorstehend beschrieben gebildet aus mindestens zwei Rohrbogen und mindestens einem Verbindungsstück mit einer Länge, wobei die Länge einen Abstand zwischen der Stirnseite und der Stirnseite der beiden Rohrbogen bestimmt, wobei Verbindungsstücke unterschiedlicher Länge vorgesehen sind, so dass der Abstand veränderbar ist. Durch Anwendung eines veränderbaren Abstandes zwischen den Abgasrohrenden einerseits sowie der Ausbildung als Rohrbogen andererseits lassen sich vielfältige Geometrien für ein modulares Abgasrohr abbilden.

Vorteilhaft kann es hierzu auch sein, wenn die Mittelachse des jeweiligen Rohrbogens einen Krümmungsradius Rm aufweist, wobei der Krümmungsradius Rm über die Länge der Mittelachse konstant ist oder zwischen den Werten m1 und m2 mit m1 <= 5 m2 variiert und/oder wenn die Mittelachse des jeweiligen Rohrbogens einen Krümmungsradius Rm aufweist und der Rohrbogen einen Durchmesser Dr, wobei gilt: 2Rm > Dr oder Rm > Dr. Wenn der Krümmungsradius Rm größer ist als der halbe Durchmesser Dr, so handelt es sich um einen Rohrbogen und nicht lediglich um ein abgeknicktes Rohr. Es soll sich in Abgrenzung zu sonstigen abgeknickten Abgasrohren, die aus Halbschalen gebildet sind, um kreisförmige Rohrbogen handeln, deren Kombination die Bildung einer Vielzahl von Anschlussgeometrien zulässt. Beide zuvor genannten Bedingungen erfüllen dieses Kriterium der Kreisförmigkeit.

Vorteilhaft kann es auch sein, wenn die Randseite eine Länge aufweist und die Randseite eine Länge aufweist, wobei an mindestens einer Randseite eine mit Bezug zur Mittelachse radial zur Rohrwand versetzt angeordnete Anlagewange vorgesehen ist, wobei sich die jeweilige Anlagewange über maximal 50 % oder maximal 20 % bis 40 % der Länge erstreckt. Die Beschränkung auf maximal 50 % der Länge gewährleistet die Anwendung von Gleichteilen. Zwei Halbschalen können in verschwenkter Position gegeneinander zur Anlage gebracht werden, so dass die Anlagewange über die genannte Länge zur Verbindung mit dem nachstehend beschriebenen Kopplungssteg zur Verfügung steht.

Dabei kann es vorteilhafterweise vorgesehen sein, dass an mindestens einer Randseite ein Kopplungssteg vorgesehen ist, der sich über maximal 50 % der Länge erstreckt, wobei zwecks Bildung des Rohrbogens der Kopplungssteg einer Halbschale mit der Randseite oder mit einer Anlagewange der benachbarten Halbschale in Formschluss bringbar ist. Der Kopplungssteg steht im Gegensatz zur Anlagewange in Umfangsrichtung über die Randseite hervor und kann somit mit einer anzulegenden Randseite in Wirkkontakt gebracht werden. Wie auch bei der Anlagewange gewährleistet die Beschränkung auf 50 % der Länge die Anwendung von Gleichteilen. Zwei gleiche Halbschalen können in verschwenkter Position gegeneinander zur Anlage gebracht werden, so dass der Kopplungssteg über die genannte Länge zur Verbindung mit der nachstehend beschriebenen Anlagewange zur Verfügung steht. Im Fall der Anwendung von Kopplungssteg und Anlagewange an einer Randseite sind beide nebeneinander angeordnet.

Die Verbindung gewährleistet durch das Ineinanderstecken von Kopplungssteg einerseits und Anlagewange bzw. Randseite andererseits einen Formschluss beider Halbschalen, der zumindest in axialer und/oder radialer Richtung zur Mittelachse wirkt.

Der Kopplungssteg ist auch alleine, ohne Anlagewange anwendbar und steht dann mit der soweit flachen Randseite in Wirkkontakt.

Hierzu kann es vorteilhaft sein, wenn die Anlagewange und der Kopplungssteg beschränkt sind auf den Abschnitt einer Hälfte der Randseite. Die jeweilige Anlagewange bzw. der jeweilige Kopplungssteg erstreckt sich dabei nicht zwingend über die gesamte Hälfte der Randseite. Dies wäre nur der Fall, wenn die Anlagewange bzw. der Kopplungssteg halb so lang wie die Länge, mithin 50 % der Länge wäre. Die Anlagewange und der Kopplungssteg sind aber mit Bezug zu einer Mitte der Randseite vorzugsweise symmetrisch zueinander angeordnet. Die jeweilige Anlagewange und der jeweilige Kopplungssteg können auch mehrteilig ausgebildet sein.

Jedoch ist ein Mischen von Anlagewangen und Kopplungsstegen innerhalb des Abschnitts einer Hälfte der jeweiligen Randseite nicht möglich, da sonst keine Gleichteile verwendet werden könnten. Die jeweilige Hälfte einer Randseite, die eine ein- oder mehrteilige Anlagewange aufweist, ist somit frei von Kopplungsstegen. Dementsprechend ist die jeweilige Hälfte einer Randseite, die einen ein- oder mehrteiligen Kopplungssteg aufweist, frei von Anlagewangen.

Somit sind die Anlagewange einer Halbschale und der Kopplungssteg der anderen angelegten bzw. aufgesetzten Halbschale mit Bezug auf die Richtung der Randseite zentriert zueinander ausgerichtet. Der Kopplungssteg ist dabei etwas kürzer als die Anlagewange bzw. maximal so lang wie die Wirklänge der Anlagewange, mithin deren Gesamtlänge abzüglich der Anformschrägen, damit der Kopplungssteg beim Gegeneinanderlegen der Halbschalen in die Anlagewange eingeführt werden kann.

Von besonderer Bedeutung kann für die vorliegende Erfindung sein, wenn an mindestens einer Stirnseite der Rohrbogen eine Schulter mit erweitertem Durchmesser vorgesehen ist, die eine Muffe bildet. Das Abgasrohr weist auf zumindest einer Seite die Muffe, auch Glockenende oder Stumpfende genannt, auf, deren Durchmesser größer ist als der des einzuführenden Rohrschaftes, so dass die Muffe das Spitzende eines nachstehend beschriebenen Verbindungsstücks oder eines angrenzenden Abgasrohres gleicher Bauart aufnehmen kann. Im Zusammenhang mit der erfindungsgemäßen Ausbildung und Anordnung kann es von Vorteil sein, wenn ein zylindrisches Verbindungsstück vorgesehen ist, das im Bereich der Stirnseite in die Einlassöffnung oder in die Auslassöffnung einführbar ist und gegen das die Schulter in axialer Richtung anlegbar ist. Durch das innenliegende Verbindungsstück können benachbarte Rohrbogen mit beliebigem Abstand zueinander positioniert werden. Zudem können die Enden der Rohrbogen besser verschweißt werden, da das Verbindungsstück die Schweißnaht nach innen abdeckt und mit geschweißt werden kann. Das Verbindungsstück kann relativ kurz ausgebildet sein, so dass beide Rohrbogen über den Schweißprozess stoffschlüssig verbunden werden. Zwecks Gewährleistung eines kompakten Doppelbogens ist das Verbindungsstück nur wenig länger als die Länge der beiden Schultern, in die es eingesteckt ist, mithin nicht länger als 30 mm bis 40 mm.

Vorteilhaft kann es ferner sein, wenn der erste Rohrbogen eine Einlassöffnung aufweist, die eine Einlassebene aufspannt, und wenn der zweite Rohrbogen eine Auslassöffnung aufweist, die eine Auslassebene aufspannt, wobei die Auslassöffnung des ersten Rohrbogens und die Einlassöffnung des zweiten Rohrbogens je einen Mittelpunkt aufweisen, und wenn beide Rohrbogen mit den Ebenen mit Bezug zu einer Achse relativ zueinander frei schwenkbar sind, wobei die Achse den Mittelpunkt schneidet und tangential zur Mittelachse verläuft. Hierdurch lassen sich zwei angrenzende Rohrbogen in beliebiger relativer Winkellage zueinander positionieren.

Ferner kann vorteilhaft sein ein Abgasrohr gebildet aus maximal zwei, drei oder vier Rohrbogen und jeweils maximal der doppelten Anzahl von Halbschalen gleicher Bauart, mithin zwei Rohrbogen und vier Halbschalen oder drei Rohrbogen und sechs Halbschalen oder vier Rohrbogen und acht Halbschalen gleicher Bauart. Durch Anwendung gleicher Bauteile können somit Abgasrohre in vielen verschiedenen Formen und Geometrien erhalten werden, um verschiedenen Abgasnachbehandlungseinheiten miteinander zu verbinden oder verschiedene Abgasnachbehandlungseinheiten anzuschließen an weiterführende Abgasrohre oder Abgasschalldämpfer.

Weitere Vorteile und Einzelheiten der Erfindung sind in den Patentansprüchen und in der Beschreibung erläutert und in den Figuren dargestellt. Es zeigen:
- Figur 1: einen Rohrbogen als Anschlussverbindung zu einem Katalysator;
- Figur 2: eine Schnittdarstellung der Verbindungsstelle zweier Rohrbogen;
- Figur 3a: einen Rohrbogen mit zwei Halbschalen in explodierter Darstellung;
- Figur 3b: eine Darstellung nach Figur 3a in zusammengebauter Darstellung;
- Figur 4a: eine Darstellung nach Figur 3a in der Ansicht von hinten;
- Figur 4b: eine Darstellung nach Figur 4a in zusammengebauter Form;
- Figur 5a: eine Darstellung nach Figur 4a ohne Anlagewange;
- Figur 5b: eine Darstellung nach Figur 5a in zusammengebauter Form;
- Figur 6: eine Prinzipskizze für Radius Rm und Durchmesser D;
- Figur 7, 8: eine Prinzipskizze zur Anlagewange Wi, Wa und zum Kopplungssteg Ki, Ka.

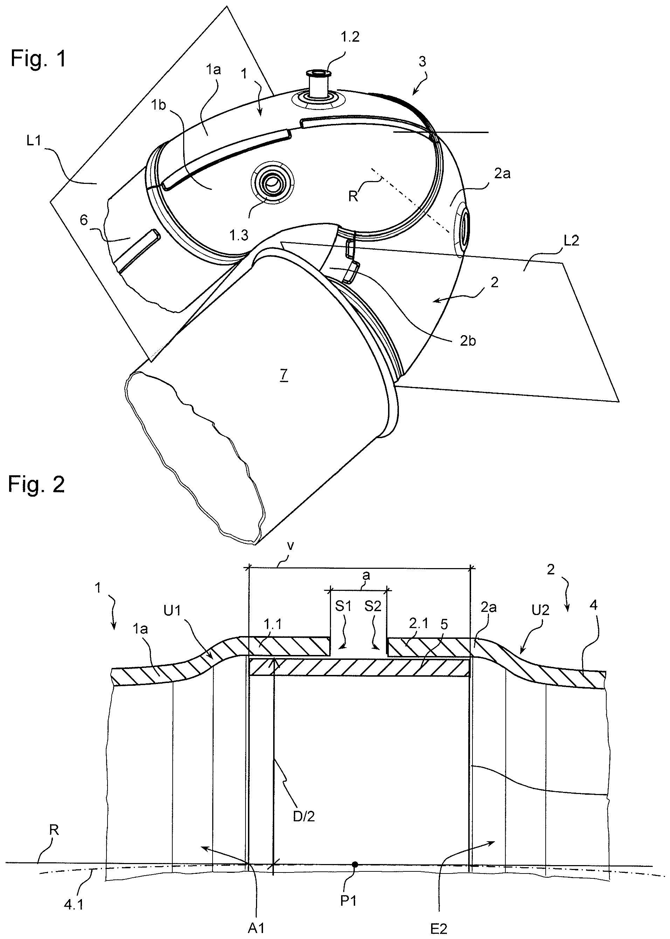

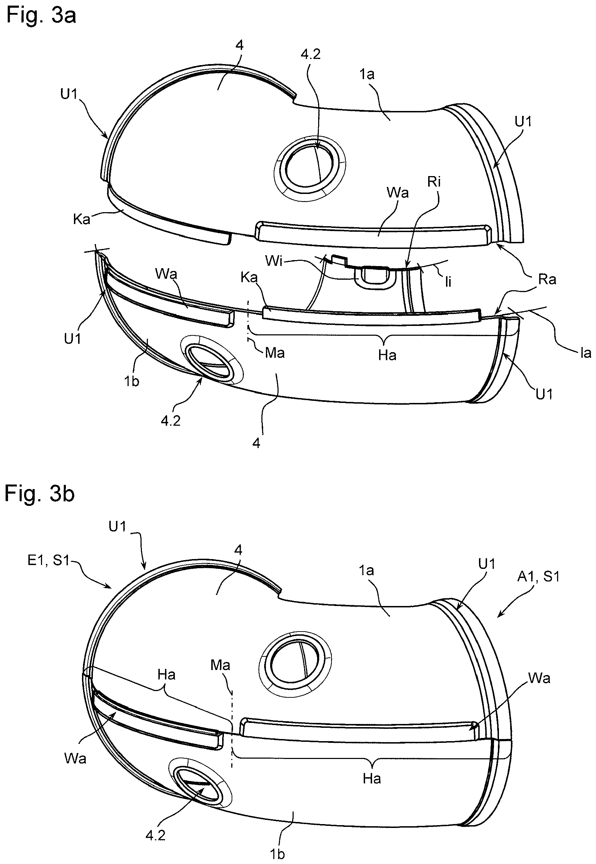

In der Darstellung nach Figur 1 ist ein Abgasanschlussrohr 6 über einen ersten Rohrbogen 1 sowie über einen zweiten Rohrbogen 2 mit einem Katalysator 7 verbunden. Sowohl der erste Rohrbogen 1 als auch der zweite Rohrbogen 2 ist jeweils gebildet aus zwei Halbschalen 1a, 1b, 2a, 2b wie in den Figuren 3a bis 4b näher dargestellt. Während der erste Rohrbogen 1 eine Anschlussebene L1 zum Abgasanschlussrohr 6 aufweist und der zweite Rohrbogen 2 eine Anschlussebene L2 zum Katalysator 7 aufweist, lassen sich beide Rohrbogen 1, 2 um die dargestellte Rotationsachse R beliebig verdrehen. Die Achse R verläuft durch einen Mittelpunkt P1 einer jeweiligen Ein- bzw. Auslassöffnung E1, E2, A1, A2.

Der erste Rohrbogen 1 weist zwei Anschlusstutzen 1.2, 1.3 für nicht weiter dargestellte Abgassonden auf.

Nach Darstellung Figur 2 ist ein Teilausschnitt eines nach Figur 1 dargestellten, über beide Rohrbogen 1, 2 zusammengesetzten Abgasrohres 3 als Schnittdarstellung der Kopplungsstelle beider Rohrbogen 1, 2 dargestellt. Eine jeweilige Rohrwand 4 weist im Bereich einer jeweiligen Stirnseite S1, S2 eine Schulter U1, U2 auf, die einen vergrößerten Durchmesser D (hier dargestellt D/2) begründet und eine Muffe 1.1, 2.1 bildet.

Da beide Rohrbogen 1, 2 wie nachstehend ausgeführt aus Gleichteilen hergestellt sind, ist für beide Rohrbogen 1, 2 der Durchmesser D derselbe. Zwecks Zusammenbau bzw. Zusammenstecken beider Rohrbogen 1, 2 ist ein rohrförmiges Verbindungsstück 5 vorgesehen, welches mit seinem Spitzende in die jeweilige Muffe 1.1, 2.1 eingeschoben ist. In Abhängigkeit einer Länge v des Verbindungsstücks 5 variiert ein Abstand a zwischen beiden Stirnseiten S1, S2. Beim axialen Zusammenführen beider Rohrbogen 1, 2 kann das Verbindungsstück 5 in axialer Richtung gegen die jeweilige Schulter U1, U2 zu Anlage kommen.

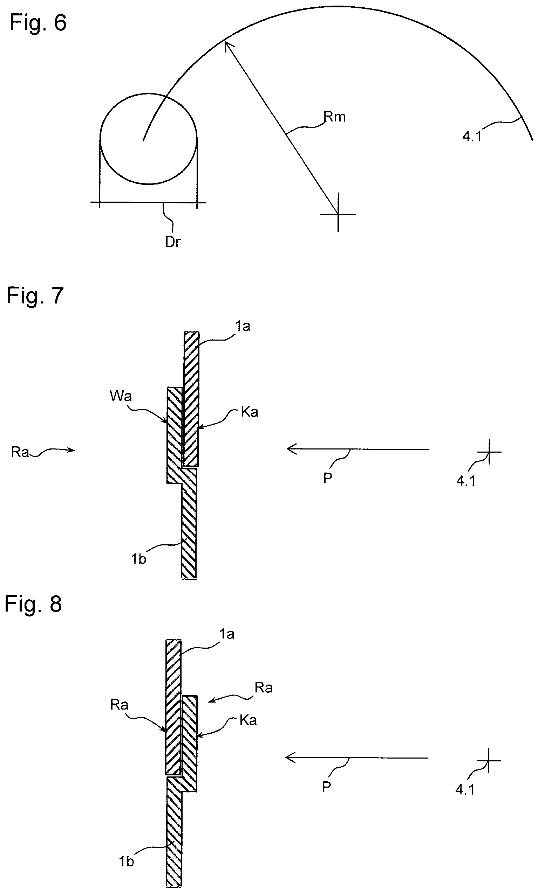

Der jeweilige Rohrbogen 1, 2 weist eine Mittelachse 4.1 auf, die wiederum einen in Figur 6 skizzierten Krümmungsradius Rm besitzt. Die in Figur 1 dargestellte Rotationsachse R verläuft tangential zur Mittelachse 4.1 und ist in Figur 2 ebenfalls dargestellt.

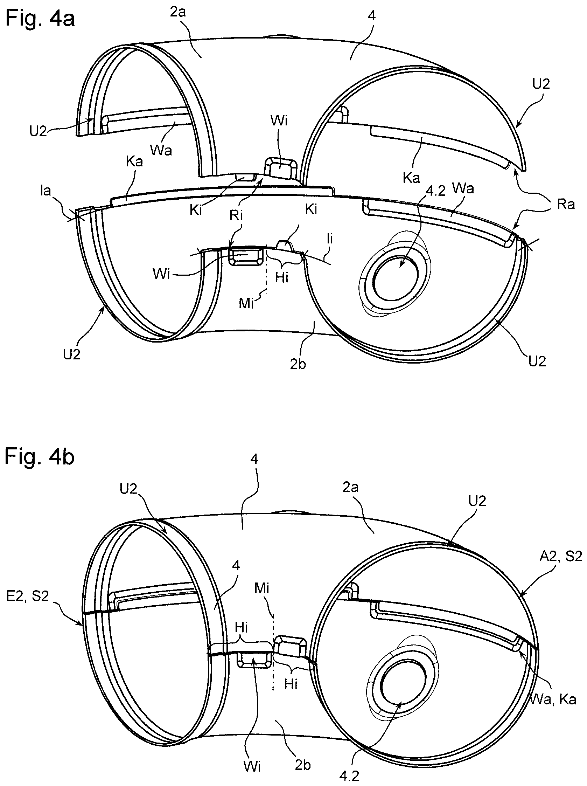

Ausweislich der beiden Figuren 3a, 4a sowie der Figuren 3b, 4b ist der jeweilige Rohrbogen 1, 2 aus zwei gleichen Halbschalen 1a, 1b gebildet. Die jeweiligen Halbschalen 1a, 1b, 2a, 2b werden über eine Randseite Ra, Ri der Länge la, li verbunden. Zwecks Verbindung beider Halbschalen 1a, 1b weist die jeweilige Halbschale 1a, 1b im Bereich der Randseite Ra, Ri sowohl auf der Innenseite als auch auf der Außenseite eine Anlagewange Wi, Wa sowie einen Kopplungssteg Ki, Ka auf. Die jeweilige Anlagewange Wi, Wa bzw. der jeweilige Kopplungssteg Ki, Ka erstreckt sich hierbei über etwa 20 % bis 40 % der jeweiligen Länge la, li, so dass ein ausreichend großer Formschluss zwischen beiden Halbschalen 1a, 1b, 2a, 2b vorhanden ist. Die jeweilige Anlagewange Wi, Wa und der jeweilige Kopplungssteg Ki, Ka sind beschränkt auf den Abschnitt einer Hälfte Hi, Ha der Randseite Ri, Ra. Die jeweilige Anlagewange Wi, Wa bzw. der jeweilige Kopplungssteg Ki, Ka erstreckt sich dabei nicht zwingend über die gesamte Hälfte Hi, Ha der Randseite Ri, Ra. Bei der Randseite Ra sind das etwa 80 %, bei der Randseite Ri etwa 50 % einer Länge la bzw. Länge li. Die Anlagewange Wi, Wa und der Kopplungssteg Ki, Ka sind aber mit Bezug zu einer Mitte Mi, Ma der Randseite Ri, Ra symmetrisch zueinander angeordnet. Die Anlagewange Wi, Wa einer Halbschale 1a, 1b und der Kopplungssteg Ki, Ka der anderen angelegten bzw. aufgesetzten Halbschale 1a, 1b sind mit Bezug auf die Richtung der Randseite Ri, Ra zentriert zueinander ausgerichtet. Der Kopplungssteg Ki, Ka ist dabei etwas kürzer als die Anlagewange Wi, Wa bzw. maximal so lang wie die Wirklänge der Anlagewange Wi, Wa, mithin deren Gesamtlänge abzüglich Anformschrägen, damit der Kopplungssteg Ki, Ka beim Gegeneinanderlegen der Halbschalen 1a, 1b in die Anlagewange Wi, Wa eingeführt werden kann.

Die jeweilige Halbschale 1a, 1b, 2a, 2b weist zudem eine Ausnehmung 4.2 auf, die zur Aufnahme eines Abgassensors dient.

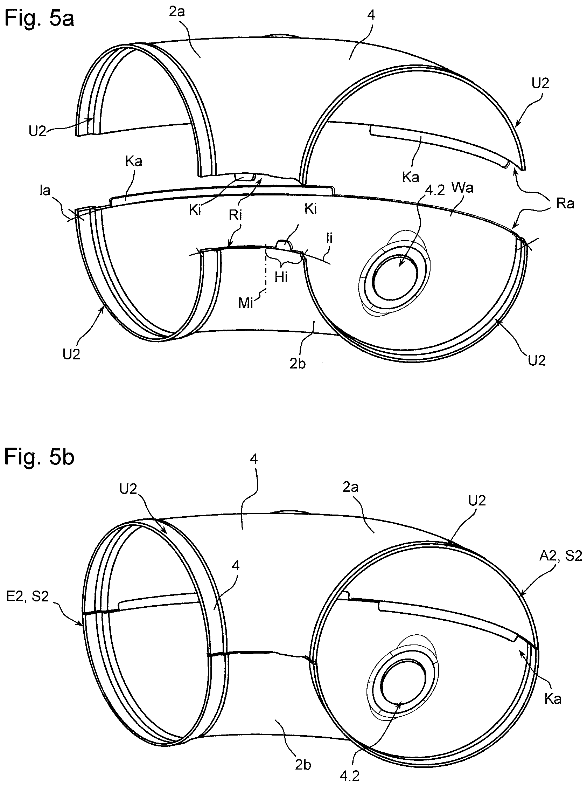

Gemäß Ausführungsbeispiel nach den Figuren 5a, 5b ist lediglich der Kopplungssteg Ka, Ki und keine Anlagewange Wa, Wi vorgesehen. Der Kopplungssteg Ka, Ki ist nach innen gekröpft und hintergreift den korrespondierenden Abschnitt des Schalenrandes Ra der Nachbarschale.

Wie nach Figur 7 am Beispiel des Außenrandes Ra zu sehen wird die jeweilige Anlagewange Wi, Wa der Halbschale 1b gebildet durch eine zusätzliche Ausformung des Randes in einer radialen Richtung P zur Mittelachse 4.1 nach außen, in die der entsprechende Kopplungssteg Ka, Ki der zu verbindenden Halbschale 1a, 1b, 2a, 2b in Umfangsrichtung eingreift und den Formschluss in radialer Richtung P bildet. Der Kopplungssteg Ka, Ki steht dabei wie in den Figuren 3a - 5b dargestellt gegenüber dem Gehäuserand in Umfangsrichtung hervor. Ein radialer Versatz gegenüber dem Gehäuserand ist nicht notwendig.

Nach Figur 8 ist entsprechend dem Ausführungsbeispiel nach den Figuren 5a, 5b keine Anlagewange Wa, Wi vorgesehen. Der Kopplungssteg Ka, Ki ist gegenüber dem Gehäuserand radial nach innen versetzt, so dass der Kopplungssteg Ka, Ki der Halbschale 1b innen am Schalenrand Ra der Halbschale 1a anliegt und den Formschluss in radialer Richtung P mit dem Schalenrand Ra bildet.

Nach Figur 6 sind stilisiert dargestellt der Krümmungsradius Rm der Mittelachse 4.1, mithin des jeweiligen Rohrbogens 1, 2, sowie ein Durchmesser Dr des jeweiligen Rohrbogens 1, 2. Aufgrund der Maßgabe, dass der Krümmungsradius Rm größer ist als zumindest der halbe Durchmesser Dr bzw. größer ist als der Durchmesser Dr, unterscheidet sich der erfindungsgemäße Rohrbogen 1, 2 von sonstigen zweischaligen Abgasrohren, die zu anderen Zwecken abgeknickt sind.

### Bezugszeichenliste

- 1: Rohrbogen
- 1a: Halbschale
- 1b: Halbschale
- 1.1: Muffe, Verbindungsmuffe
- 1.2: Anschlussstutzen
- 1.3: Anschlussstutzen
- 2: Rohrbogen
- 2a: Halbschale
- 2b: Halbschale
- 2.1: Muffe, Verbindungsmuffe
- 3: Abgasrohr
- 4: Rohrwand
- 4.1: Mittelachse
- 4.2: Ausnehmung
- 5: Verbindungsstück
- 6: Abgasanschlussrohr
- 7: Katalysator
- A1: Auslassöffnung
- A2: Auslassöffnung
- a: Abstand zwischen S1, S2
- D: Durchmesser
- Dr: Durchmesser
- E1: Einlassöffnung
- E2: Einlassöffnung
- Ha: Hälfte von Ra
- Hi: Hälfte von Ri
- Ka: Kopplungssteg
- Ki: Kopplungssteg
- L1: Einlassebene
- L2: Auslassebene
- la: Länge
- li: Länge
- Ma: Mitte von Ra
- Mi: Mitte von Ri
- P: radiale Richtung zur 4.1
- P1: Mittelpunkt
- R: (Rotations-) Achse
- Ra: äußere Randseite von 1a, 1b, 2a, 2b
- Ri: innere Randseite von 1a, 1b, 2a, 2b
- Rm: Krümmungsradius
- m1: Wert von Rm
- m2: Wert von Rm
- S1: Stirnseite von 1
- S2: Stirnseite von 2
- U1: Schulter
- U2: Schulter
- v: Länge von 5
- Wa: Anlagewange
- Wi: Anlagewange

## Patentansprüche

1. Abgasrohr (3) gebildet aus zwei Rohrbogen (1, 2) mit je einer Rohrwand (4) und je einer Mittelachse (4.1), die jeweils aus zwei Halbschalen (1a, 1b, 2a, 2b) gebildet sind, wobei die jeweilige Halbschale (1a, 1b, 2a, 2b) eine innere Randseite (Ri) und eine äußere Randseite (Ra) aufweist, die zwecks Bildung des Rohrbogens (1, 2) gegeneinander zur Anlage bringbar sind, wobei der jeweilige Rohrbogen (1, 2) eine Stirnseite (S1, S2) aufweist und beide Stirnseiten (S1, S2) zwecks Bildung des Abgasrohres (3) gegeneinander zur Anlage bringbar sind, wobei der jeweilige Rohrbogen (1, 2) nur eine Einlassöffnung (E1, E2) und nur eine Auslassöffnung (A1, A2) aufweist,
**dadurch gekennzeichnet,**
**dass** alle vier Halbschalen (1a, 1b, 2a, 2b) Gleichteile sind.

2. Abgasrohr (3) nach Anspruch 1,
**dadurch gekennzeichnet,**
**dass** die Mittelachse (4.1) des jeweiligen Rohrbogens (1, 2) einen Krümmungsradius Rm aufweist, wobei der Krümmungsradius Rm über die Länge der Mittelachse (4.1) konstant ist oder zwischen den Werten m1 und m2 mit m1 <= 5 m2 variiert.

3. Abgasrohr (3) nach Anspruch 1 oder 2,
**dadurch gekennzeichnet,**
**dass** die Mittelachse (4.1) des jeweiligen Rohrbogens (1, 2) einen Krümmungsradius Rm aufweist und der Rohrbogen (1, 2) einen Durchmesser Dr, wobei gilt: 2Rm > Dr oder Rm > Dr.

4. Abgasrohr (3) nach einem der vorhergehenden Ansprüche,
**dadurch gekennzeichnet,**
**dass** die innere Randseite (Ri) eine Länge (li) aufweist und die äußere Randseite (Ra) eine Länge (la) aufweist, wobei an mindestens einer Randseite (Ri, Ra) eine mit Bezug zur Mittelachse (4.1) radial zur Rohrwand (4) versetzt angeordnete Anlagewange (Wi, Wa) vorgesehen ist, wobei sich die jeweilige Anlagewange (Wi, Wa) über maximal 50 % der Länge (li, la) erstreckt.

5. Abgasrohr (3) nach einem der vorhergehenden Ansprüche,
**dadurch gekennzeichnet,**
**dass** die innere Randseite (Ri) eine Länge (li) aufweist und die äußere Randseite (Ra) eine Länge (la) aufweist, wobei an mindestens einer Randseite (Ri, Ra) ein Kopplungssteg (Ki, Ka) vorgesehen ist, der sich über maximal 50 % der Länge (li, la) erstreckt, wobei zwecks Bildung des Rohrbogens (1) der Kopplungssteg (Ki, Ka) der Halbschale (1a) mit der Randseite (Ri, Ra) oder mit einer Anlagewange (Wi, Wa) der benachbarten Halbschale (1b) in Formschluss bringbar ist.

6. Abgasrohr (3) nach Anspruch 4 oder 5,
**dadurch gekennzeichnet,**
**dass** die Anlagewange (Wi, Wa) und der Kopplungssteg (Ki, Ka) beschränkt sind auf jeweils eine Hälfte (Hi, Ha) der Randseite (Ri, Ra).

7. Abgasrohr (3) nach einem der vorhergehenden Ansprüche,
**dadurch gekennzeichnet,**
**dass** an mindestens einer Stirnseite (S1, S2) der Rohrbogen (1, 2) eine Schulter (U1, U2) mit erweitertem Durchmesser (D) vorgesehen ist, die eine Muffe (1.1, 2.1) bildet.

8. Abgasrohr (3) nach Anspruch 5,
**dadurch gekennzeichnet,**
**dass** ein zylindrisches Verbindungsstück (5) vorgesehen ist, das im Bereich der Stirnseite (S1, S2) in die Einlassöffnung (E1, E2) oder in die Auslassöffnung (A1, A2) einführbar ist und gegen das die Schulter (U1, U2) in axialer Richtung anlegbar ist.

9. Abgasrohr (3) nach einem der vorhergehenden Ansprüche,
**dadurch gekennzeichnet,**
**dass** der erste Rohrbogen (1) die Einlassöffnung (E1) aufweist, die eine Einlassebene (L1) aufspannt, und dass der zweite Rohrbogen (2) die Auslassöffnung (A2) aufweist, die eine Auslassebene (L2) aufspannt, wobei die Auslassöffnung (A1) des ersten Rohrbogens (1) und die Einlassöffnung (E2) des zweiten Rohrbogens (2) je einen Mittelpunkt (P1) aufweisen, und dass beide Rohrbogen (1, 2) mit den Ebenen (L1, L2) mit Bezug zu einer Rotationsachse (R) relativ zueinander frei schwenkbar sind, wobei die Achse (R) den Mittelpunkt (P1) schneidet und tangential zur Mittelachse (4.1) verläuft.

10. Abgasrohr (3) nach einem der vorhergehenden Ansprüche gebildet aus mindestens zwei Rohrbogen (1, 2) und mindestens einem Verbindungsstück (5) mit einer Länge (v), wobei die Länge (v) einen Abstand (a) zwischen der Stirnseite (S₁) des ersten Rohrbogens (1) und der Stirnseite (S2) des zweiten Rohrbogens (2) bestimmt, wobei Verbindungsstücke (5) unterschiedlicher Länge (v) vorgesehen sein können, so dass der Abstand (a) veränderbar ist.

11. Abgasrohr (3) nach einem der vorhergehenden Ansprüche gebildet aus maximal zwei, drei oder vier gleichen Rohrbogen (1, 2) und maximal jeweils der doppelten Anzahl von gleichen Halbschalen (1a, 1b, 2a, 2b).

## Claims

1. An exhaust pipe (3) formed from two pipe elbows (1, 2) each having a pipe wall (4) and a centre axis (4.1), each pipe elbow being formed from two half shells (1a, 1b, 2a, 2b), wherein each half shell (1a, 1b, 2a, 2b) has an inner edge side (Ri) and an outer edge side (Ra), which inner edge sides and outer edge sides can be brought into contact with each other in order to form the pipe elbow (1, 2), wherein each pipe elbow (1, 2) has a face (S1, S2) and the two faces (S1, S2) can be brought into contact with each other in order to form the exhaust pipe (3), wherein each pipe elbow (1, 2) has only one inlet opening (E1, E2) and only one outlet opening (A1, A2),
**characterised in that**
all four half shells (1a, 1b, 2a, 2b) are identical parts.

2. The exhaust pipe (3) according to Claim 1,
**characterised in that**
the centre axis (4.1) of each pipe elbow (1, 2) has a radius of curvature Rm, wherein the radius of curvature Rm is constant over the length of the centre axis (4.1) or varies between the values m1 and m2, where m1 <= 5 m2.

3. The exhaust pipe (3) according to Claim 1 or 2,
**characterised in that**
the centre axis (4.1) of each pipe elbow (1, 2) has a radius of curvature Rm and the pipe elbow (1, 2) has a diameter Dr, wherein 2Rm > Dr or Rm > Dr.

4. The exhaust pipe (3) according to any one of the preceding claims,
**characterised in that**
the inner edge side (Ri) has a length (li) and the outer edge side (Ra) has a length (la), wherein a contact cheek (Wi, Wa) which is arranged radially offset from the pipe wall (4) with respect to the centre axis (4.1) is provided on at least one edge side (Ri, Ra), wherein each contact cheek (Wi, Wa) extends over a maximum of 50% of the length (li, la).

5. The exhaust pipe (3) according to any one of the preceding claims,
**characterised in that**
the inner edge side (Ri) has a length (li) and the outer edge side (Ra) has a length (la), wherein a coupling web (Ki, Ka) is provided on at least one edge side (Ri, Ra), which coupling web extends over a maximum of 50% of the length (li, la), wherein the coupling web (Ki, Ka) of the half shell (1a) can be brought into a positive fit with the edge side (Ri, Ra) or with a contact cheek (Wi, Wa) of the neighbouring half shell (1b) in order to form the pipe elbow (1).

6. The exhaust pipe (3) according to Claim 4 or 5,
**characterised in that**
the contact cheek (Wi, Wa) and the coupling web (Ki, Ka) are restricted in each case to a half (Hi, Ha) of the edge side (Ri, Ra).

7. The exhaust pipe (3) according to any one of the preceding claims,
**characterised in that**
a shoulder (U1, U2) having an extended diameter (D) is provided on at least one face (S1, S2) of the pipe elbows (1, 2), which shoulder forms a sleeve (1.1,2.1).

8. The exhaust pipe (3) according to Claim 5,
**characterised in that**
a cylindrical connector (5) is provided, which can be introduced in the region of the face (S1, S2) into the inlet opening (E1, E2) or into the outlet opening (A1, A2) and against which the shoulder (U1, U2) can come to rest in an axial direction.

9. The exhaust pipe (3) according to any one of the preceding claims,
**characterised in that**
the first pipe elbow (1) has the inlet opening (E1) which spans an inlet plane (L1), and the second pipe elbow (2) has the outlet opening (A2) which spans an outlet plane (L2), wherein the outlet opening (A1) of the first pipe elbow (1) and the inlet opening (E2) of the second pipe elbow (2) each have a midpoint (P1), and **in that** both pipe elbows (1, 2) with the planes (L1, L2) can be freely swivelled relative to one another with respect to an axis of rotation (R), wherein the axis (R) intersects the midpoint (P1) and runs tangentially to the centre axis (4.1).

10. The exhaust pipe (3) according to any one of the preceding claims, formed from at least two pipe elbows (1, 2) and at least one connector (5) having a length (v), wherein the length (v) determines a distance (a) between the face (S1) of the first pipe elbow (1) and the face (S2) of the second pipe elbow (2), wherein connectors (5) of differing lengths (v) can be provided such that the distance (a) can be modified.

11. The exhaust pipe (3) according to any one of the preceding claims, formed from a maximum of two, three or four identical pipe elbows (1, 2) and at most, in each case, double the number of identical half shells (1a, 1b, 2a, 2b).

## Revendications

1. Tuyau de gaz d'échappement (3) formé de deux tuyaux coudés (1, 2) présentant chacun une paroi (4) de tuyau et un axe central (4.1), et constitués chacun de deux demi-coques (1a, 1b, 2a, 2b), chaque demi-coque (1a, 1b, 2a, 2b) présentant un bord latéral intérieur (Ri) et un bord latéral extérieur (Ra) applicables l'un contre l'autre pour former le tuyau coudé (1, 2), chaque tuyau coudé (1, 2) présentant un bord frontal (S1, S2) et les deux bords frontaux (S1, S2) étant applicables l'un contre l'autre pour former le tuyau de gaz d'échappement (3), chaque tuyau coudé (1, 2) ne présentant qu'une seule ouverture d'admission (E1, E2) et une seule ouverture d'échappement (A1, A2),
**caractérisé en ce que** les quatre demi-coques (1a, 1b, 2a, 2b) sont des pièces identiques.

2. Tuyau de gaz d'échappement (3) selon la revendication 1,
**caractérisé en ce que** l'axe central (4.1) de chaque tuyau coudé (1, 2) a un rayon de courbure Rm, ledit rayon de courbure Rm étant constant sur la longueur de l'axe central (4.1) ou variant entre les valeurs m1 et m2, où m1 <= 5 m2.

3. Tuyau de gaz d'échappement (3) selon la revendication 1 ou la revendication 2,
**caractérisé en ce que** l'axe central (4.1) de chaque tuyau coudé (1, 2) a un rayon de courbure Rm, et le tuyau coudé (1, 2) un diamètre Dr, où 2Rm > Dr ou Rm > Dr.

4. Tuyau de gaz d'échappement (3) selon l'une quelconque des revendications précédentes, **caractérisé en ce que** le bord latéral intérieur (Ri) a une longueur (li) et le bord latéral extérieur (Ra) une longueur (la), une flasque de butée (Wi, Wa) étant prévue sur au moins un bord latéral (Ri, Ra), décalée radialement vers la paroi (4) de tuyau par rapport à l'axe central (4.1), chaque flasque de butée (Wi, Wa) s'étendant sur 50 % au plus de la longueur (li, la).

5. Tuyau de gaz d'échappement (3) selon l'une quelconque des revendications précédentes,
**caractérisé en ce que** le bord latéral intérieur (Ri) a une longueur (li) et le bord latéral extérieur (Ra) une longueur (la), une languette d'accouplement (Ki, Ka) étant prévue sur au moins un bord latéral (Ri, Ra) et s'étendant sur 50 % au plus de la longueur (li, la), la languette d'accouplement (Ki, Ka) de la demi-coque (1a) pouvant être accouplée par engagement positif avec le bord latéral (Ri, Ra) ou avec une flasque de butée (Wi, Wa) de la demi-coque (1b) contiguë pour former le tuyau coudé (1).

6. Tuyau de gaz d'échappement (3) selon la revendication 4 ou la revendication 5,
**caractérisé en ce que** la flasque de butée (Wi, Wa) et la languette d'accouplement (Ki, Ka) sont limitées chacune à une moitié (Hi, Ha) du bord latéral (Ri, Ra).

7. Tuyau de gaz d'échappement (3) selon l'une quelconque des revendications précédentes,
**caractérisé en ce qu'**un épaulement (U1, U2) à diamètre (D) élargi est prévu sur au moins un bord frontal (S1, S2) des tuyaux coudés (1, 2), lequel forme un manchon (1.1, 2.1).

8. Tuyau de gaz d'échappement (3) selon la revendication 5,
**caractérisé en ce qu'**une pièce de connexion (5) est prévue, laquelle est insérable dans l'ouverture d'admission (E1, E2) ou dans l'ouverture d'échappement (A1, A2) au niveau du bord frontal (S1, S2) et contre laquelle l'épaulement (U1, U2) peut être mis en butée dans la direction axiale.

9. Tuyau de gaz d'échappement (3) selon l'une quelconque des revendications précédentes, **caractérisé en ce que** le premier tuyau coudé (1) présente l'ouverture d'admission (E1) définissant un plan d'admission (L1), et **en ce que** le deuxième tuyau coudé (2) présente l'ouverture d'échappement (A2) définissant un plan d'échappement (L2), l'ouverture d'échappement (A1) du premier tuyau coudé (1) et l'ouverture d'admission (E2) du deuxième tuyau coudé (2) ayant chacune un centre (P1), et **en ce que** les deux tuyaux coudés (1, 2) sont pivotants relativement librement l'un relativement à l'autre avec les plans (L1, L2) par rapport à un axe de rotation (R), ledit axe (R) passant par le centre (P1) et s'étendant tangentiellement à l'axe central (4.1).

10. Tuyau de gaz d'échappement (3) selon l'une quelconque des revendications précédentes, formé d'au moins deux tuyaux coudés (1, 2) et d'au moins une pièce de connexion (5) ayant une longueur (v), la longueur (v) déterminant une distance (a) entre le bord frontal (S1) du premier tuyau coudé (1) et le bord frontal (S2) du deuxième tuyau coudé (2), des pièces de connexion (5) de longueurs (v) différentes pouvant être prévues de manière à pouvoir modifier la distance (a).

11. Tuyau de gaz d'échappement (3) selon l'une quelconque des revendications précédentes, formé de deux, trois ou quatre tuyaux coudés (1, 2) identiques au maximum, et d'un nombre deux fois supérieur de demi-coques (1a, 1b, 2a, 2b) identiques au maximum.
